# EUROPÄISCHE PATENTSCHRIFT

(11) **EP 2 523 864 B1**
(45) Veröffentlichungstag und Bekanntmachung des Hinweises auf die Patenterteilung: **30.03.2016**
(21) Anmeldenummer: 11701471.2
(22) Anmeldetag: 07.01.2011
(51) Int. Cl.: B65D 25/06, B65D 19/44

(54) **VORRICHTUNG ZUM TRANSPORT VON GEGENSTÄNDEN**
DEVICE FOR TRANSPORTING OBJECTS
DISPOSITIF POUR LE TRANSPORT D'OBJETS

(30) Priorität: 12.01.2010 DE 202010000875 U
(43) Veröffentlichungstag der Anmeldung: 21.11.2012
(73) Patentinhaber: Paul Hettich GmbH & Co. KG, 32278 Kirchlengern (DE)
(72) Erfinder: GERKENSMEIER, Christian, 32289 Rödinghausen (DE); HAMPKER, Reinhard, 32049 Herford (DE)
(74) Vertreter: Dantz, Jan Henning
(86) Internationale Anmeldenummer: PCT/EP2011/050173
(87) Internationale Veröffentlichungsnummer: WO 2011/086037

(56) Entgegenhaltungen:
- GB-A- 2 412 910
- JP-A- 11 091 909
- JP-A- 2002 171 085
- US-A- 3 798 507
- US-A- 4 512 473
- US-A- 4 527 222
- US-A1- 2005 041 325
- US-A1- 2006 180 497
- US-A1- 2008 258 587

## Beschreibung

Die vorliegende Erfindung betrifft eine Vorrichtung zum Transport von Gegenständen nach dem Oberbegriff des Anspruchs 1.

Für die Lagerung und den Transport von Gegenständen sind Gitterboxen bzw. Palettenbehälter bekannt, in denen in Produktionsanlagen hergestellte Gegenstände abgelegt werden. Dadurch sind die Gegenstände ungeordnet und können schlecht in einer automatisierten Fertigung entnommen werden. Zudem können die Gegenstände beim Transport und/oder beim Befüllen der Gitterboxen beschädigt werden.

Es sind Transportvorrichtungen bekannt, bei denen die Gegenstände in festen Magazinen abgelegt werden. Dadurch können die Gegenstände für eine spätere Entnahme exakt positioniert werden und sind zudem vor Beschädigungen geschützt. Allerdings sind solche Transportvorrichtungen nicht flexibel und die Magazine können nur für Gegenstände vorbestimmter Größe eingesetzt werden.

Die DE 41 39 761 offenbart eine Transporteinrichtung für Waren, bei der auf einer Tragfläche ein rahmenförmig umlaufendes Gestell montiert ist. Das Gestell weist Stützen und Traversen auf, an denen Halter zum Abstützen von Gegenständen montiert sind, die in unterschiedlichen Positionen fixiert werden können. Ein Transport und eine Halterung schwerer Gegenstände sind mit diesem Aufbau nur begrenzt möglich. Durch die rahmenförmige Ausbildung des Gestells ist die Zugänglichkeit von der Seite erschwert.

Die JP 2002-171085 offenbart ein Magazin zur Aufnahme von Gegenständen, wobei das Magazin sowohl an einer Bodenplatte als auch an einer oberen Platte ein paar Führungsschienen aufweist. An den Führungsschienen ist ein Halter verschiebbar gelagert, wobei über einen Antriebsmechanismus die Halter entlang der Führungsschienen an der Bodenplatte und der oberen Platte verschoben werden können.

Die US 2006/180497 A1 offenbart eine Trägerstruktur für Glasscheiben, die an der Trägerstruktur gehalten werden.

Die US 4 512 473 A zeigt ist eine Vorrichtung zum Transport von Glaspaneelen, wobei Halterungen vorgesehen sind, um die Glaspaneele in einer aufrechten Position zu fixieren.

In der US 3 798 507 A ist ein Gestell für elektrische Geräte offenbart.

Ferner offenbart die US 4 527 222 ein Gestell zur Aufnahme von Leiterplatten, bei dem die Leiterplatten zwischen zwei Wänden gehalten sind und eine der Wände verstellbar an zwei Stangen montiert ist. Aus diesem Dokument sind alle Merkmale des Oberbegriffs des Anspruchs 1 bekannt.

Es ist daher Aufgabe der vorliegenden Erfindung, eine Vorrichtung zum Transport von Gegenständen zu schaffen, die bei einfachem Aufbau einen sicheren Transport auch schwerer Gegenstände gewährleistet und flexibel an unterschiedlich große Gegenstände angepasst werden kann.

Diese Aufgabe wird mit einer Vorrichtung zum Transport von Gegenständen mit den Merkmalen des Anspruches 1 gelöst.

Erfindungsgemäß umfasst die Vorrichtung zum Transport von Gegenständen zwischen den Außenwänden mindestens einen mittleren Wandabschnitt, der an einer bodenseitigen Führung verschiebbar gelagert ist und in unterschiedlichen Abständen von einer Außenwand fixierbar ist. Dadurch können zwischen dem verschiebbaren mittleren Wandabschnitt und einer Außenwand eine Vielzahl von Magazinen ausgebildet werden, in die entsprechende Gegenstände abgelegt werden können. Dabei wird der Gegenstand mit einem Endabschnitt in einen Aufnahmeschacht an einer Außenwand und an der gegenüberliegenden Seite in einen Aufnahmeschacht an dem mittleren Wandabschnitt abgelegt. Falls sich die Länge der abzulegenden Gegenstände ändert, beispielsweise aufgrund einer Umstellung in der Produktion, kann die Vorrichtung weiter genutzt werden, es wird lediglich der mittlere Wandabschnitt verschoben und in der Position an die Länge der abzulegenden Gegenstände angepasst. Dadurch kann mit einer Vorrichtung zum Transport von Gegenständen ein hohes Maß an Flexibilität geschaffen werden, wobei die Gegenstände in den einzelnen Schächten positionsgenau angeordnet sind und dann auch in einem automatisierten Fertigungsverfahren gegriffen werden können.

Vorzugsweise sind zwischen den Außenwänden mehrere verschiebbar gelagerte Wandabschnitte vorgesehen, so dass in der Vorrichtung zum Transport von Gegenständen mehrere Reihen mit abgelegten Gegenständen gebildet werden können. Insbesondere können zwei, drei oder vier verschiebbare Wandabschnitte verschiebbar an dem Boden gelagert sein.

Für ein einfaches Verschieben der Wandabschnitte sind diese bodenseitig an mindestens einer Schiene geführt. Die mindestens eine Schiene ist dabei im Querschnitt U-förmig ausgebildet, wobei mindestens eine mit dem Wandabschnitt verbundene Laufrolle in der Schiene geführt ist. Dadurch wird eine leichtgängige Führung gewährleistet und ein Verkanten der Wandabschnitte verhindert. Um die Führung der Wandabschnitte zu verbessern, kann der Wandabschnitt bodenseitig einen Schlitten aufweisen, an dem mindestens zwei voneinander in Längsrichtung der Schiene beabstandete Laufrollen gelagert sind. Gerade wenn jeder verschiebbare Wandabschnitt bodenseitig mindestens zwei Schlitten aufweist, die an parallel angeordneten Schienen geführt sind, lässt sich ein Verkanten der Wandabschnitte sicher vermeiden.

Jeder Schacht weist einen Bodenabschnitt auf, an dem der unterste Gegenstand mit einem Endabschnitt aufliegt. Dadurch ist gewährleistet, dass die Gegenstände auch in der Höhe exakt positioniert sind und zudem Gewichtskräfte über die Wandabschnitte auf das Gestell oder die Schienen abgetragen werden. Dabei kann verhindert werden, dass die Gewichtskräfte auf Führungselemente, wie die Laufrollen, wirken, um eine Beschädigung bei höheren Gewichtslasten, insbesondere beim Ablegen metallischer Bauteile, zu vermeiden.

Zur Fixierung des mindestens einen mittleren Wandabschnittes ist zwischen den Außenwänden mindestens ein Halteelement angeordnet, an dem die verschiebbaren Wandabschnitte fixierbar sind. Dabei kann zur Vermeidung von Kippbewegungen der Wandabschnitte mindestens ein Halteelement zumindest an einer Seite beabstandet vom Boden, vorzugsweise in der oberen Hälfte der Wandabschnitte, angeordnet sein.

Um auf einfache Weise einen Verstellvorgang zu ermöglichen, können die Halteelemente als Zahnstangen ausgebildet sein, an denen die Wandabschnitte in vorbestimmten Positionen fixierbar sind. Dadurch können über die Zahnstangen Rastpositionen vorgegeben werden, damit die Schächte an den Außenwänden und den verschiebbaren Wandabschnitten exakt zueinander positioniert sind. Die Halteelemente sind dabei in einer ersten Position außer Eingriff mit dem mindestens einen verschiebbaren Wandabschnitt und fixieren in einer zweiten Position den mindestens einen Wandabschnitt. Für eine einfache Handhabung sind die Halteelemente in der ersten und der zweiten Position über eine Kulissenführung verrastbar, so dass auch eine einzelne Bedienperson einen Verstellvorgang ausführen kann.

Die Erfindung wird nachfolgend anhand mehrerer Ausführungsbeispiele mit Bezug auf die beigefügten Zeichnungen näher erläutert. Es zeigen:

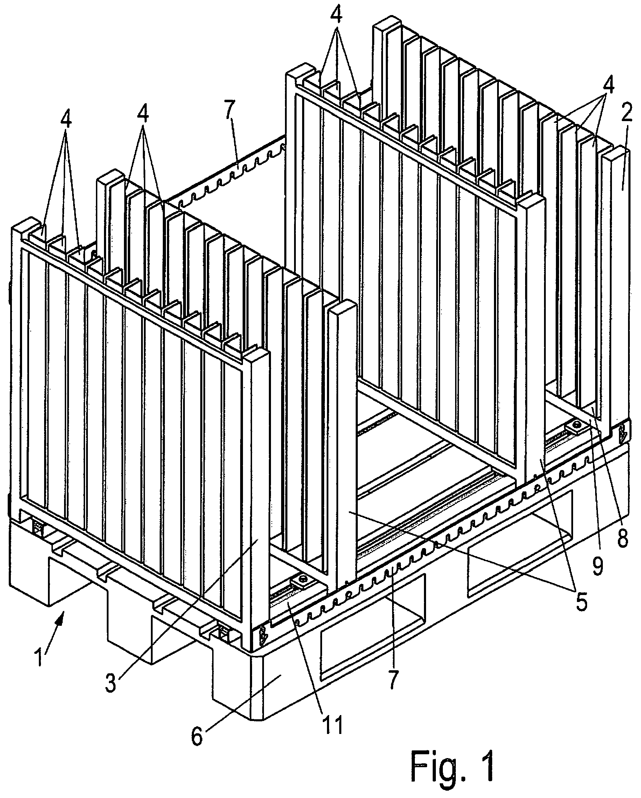

- Figur 1: eine perspektivische Ansicht einer erfindungsgemäßen Vorrichtung zum Transport von Gegenständen;

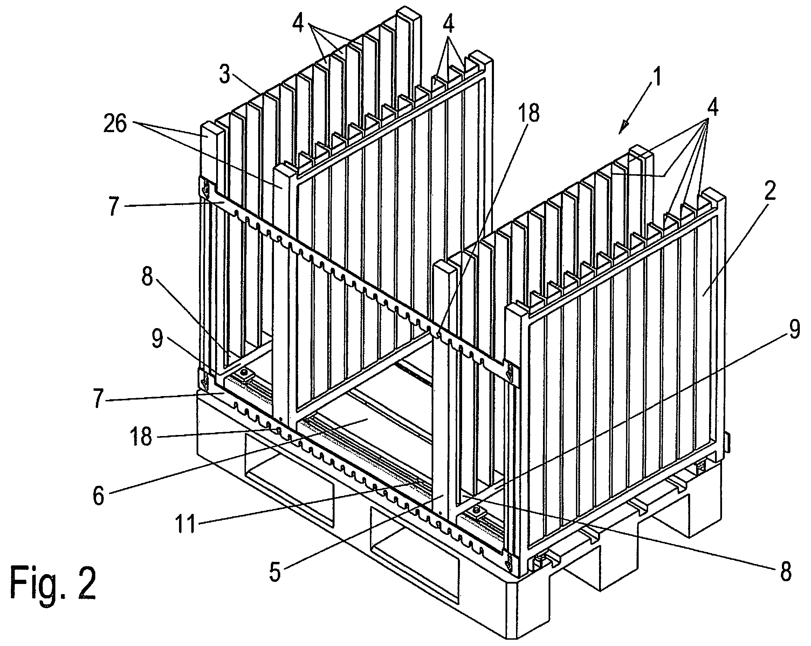

- Figur 2: eine perspektivische Ansicht der Vorrichtung der Figur 1;
- Figur 3: eine Detailansicht der Vorrichtung der Figur 1 im Bodenbereich;

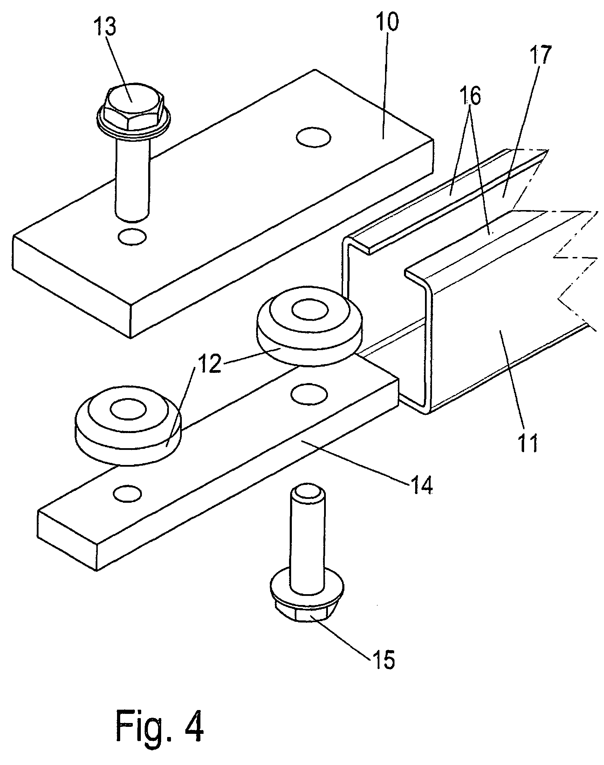

- Figur 4: eine perspektivische Explosionsdarstellung des Schlittens eines verfahrbaren Wandabschnittes;
- Figur 5: eine perspektivische Detailansicht eines Halteelementes der Vorrichtung der Figur 1 in einer ersten Position;
- Figur 6: eine perspektivische Detailansicht eines Halteelementes der Vorrichtung der Figur 1 in einer Fixierposition;
- Figur 7: eine perspektivische Ansicht des Halteelementes;
- Figur 8: eine perspektivische Ansicht eines zweiten Ausführungsbeispieles einer erfindungsgemäßen Vorrichtung, und
- Figur 9: eine perspektivische Ansicht eines modifizierten Ausführungsbeispiels.

Eine Vorrichtung 1 zum Lagern und Transport von Gegenständen ist im Wesentlichen quaderförmig ausgebildet und umfasst an gegenüberliegenden Stirnseiten Außenwände 2 und 3, an denen eine Vielzahl von Aufnahmeschächten 4 ausgebildet sind. Zwischen den Außenwänden 2 und 3 sind zwei Wandabschnitte 5 vorgesehen, die bodenseitig verschiebbar gelagert sind. Die Wandabschnitte 5 weisen an einer Seite oder beidseitig ebenfalls Aufnahmeschächte 4 auf, die gegenüber den Aufnahmeschächten 4 an den Außenwänden 2 und 3 angeordnet sind. Dadurch kann ein Gegenstand, beispielsweise eine Profilschiene, mit einem ersten Endabschnitt in einen Aufnahmeschacht 4 an einer Außenwand 2 bzw. 3 und mit einem zweiten Endabschnitt in einen Aufnahmeschacht 4 an einem Wandabschnitt 5 eingefügt werden. Die Aufnahmeschächte 4 sind durch U-förmige Profile gebildet, so dass die Endabschnitte des Gegenstandes geschützt angeordnet sind.

Der Boden der Vorrichtung 1 umfasst eine Palette 6, die als genormte Euro-Palette ausgebildet ist und auf der in Längsrichtung zwei voneinander beabstandete Schienen 11 montiert sind. An den Schienen 11 sind die Wandabschnitte 5 verschiebbar gehalten, wobei die Wandabschnitte 5 in vorbestimmten Positionen durch Halteelemente 7 fixiert werden. Die Halteelemente 7 sind als Zahnstangen ausgebildet, wobei bodenseitig an gegenüberliegenden Seiten ein Halteelement 7 vorgesehen ist und auf einer Seite auch ein Halteelement 7 im oberen Bereich der Wandabschnitte 5 angeordnet ist.

Die Außenwände 2 und 3 sowie die Wandabschnitte 5 umfassen bodenseitig jeweils einen Querbalken 9, dessen Oberseite einen Boden 8 in den Aufnahmeschächten 4 ausbildet. Dadurch wird die Last der in den Aufnahmeschächten 4 abgelegten Gegenstände über den Querbalken 9 verteilt.

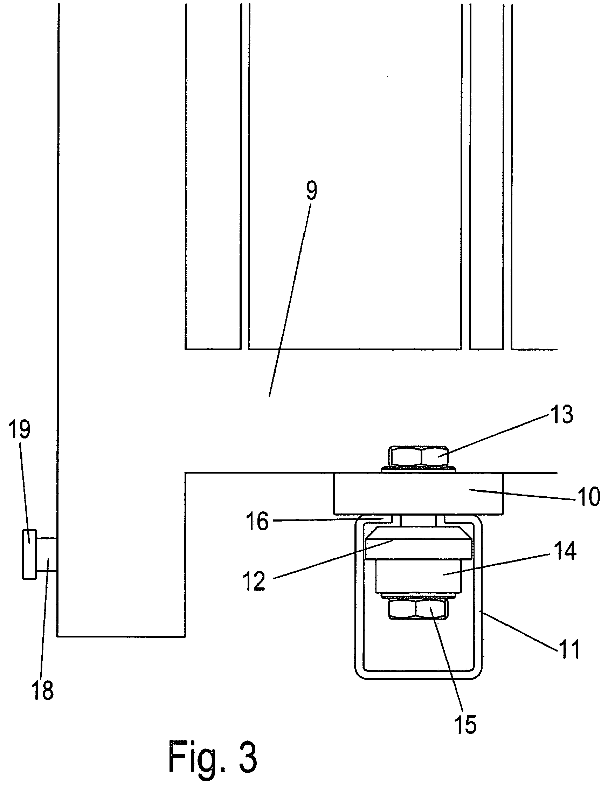

Wie in Figur 3 gezeigt ist, stützt sich der Querbalken 9 einer Außenwand 2 oder 3 bzw. eines Wandabschnittes 5 auf einer Halteplatte 10 ab, die auf der im Querschnitt U-förmigen Schiene 11 aufliegt. Die Schiene 11 besitzt an beiden Schenkeln nach innen abgewinkelte Abschnitte 16, die eine ebene Auflagefläche für die Halteplatte 10 bilden. An der Halteplatte 10 sind zwei in Längsrichtung der Schiene 11 voneinander beabstandete Laufrollen 12 drehbar gelagert, wobei die Laufrollen 12 mit geringem Spiel zwischen den Schenkeln der Schiene 11 angeordnet sind. Unterhalb der Laufrollen 12 ist ein Steg 14 vorgesehen, wobei über eine erste Schraube 13 und eine zweite Schraube 15 die Laufrollen 12 zwischen der Halteplatte 10 und dem Steg 14 gelagert sind. Die Schrauben 13 und 15 können wahlweise von oben oder unten in die Halteplatte 10 bzw. den Steg 14 montiert werden. Die Laufrollen 12 sind so in der Schiene 11 angeordnet, dass bei einer Schiebebewegung eines Wandabschnittes 5 entlang der Schiene 11 eine seitliche Führung gegeben ist, allerdings der Wandabschnitt 5 auch gegen ein Anheben bzw. Kippen gesichert ist, da die Laufrollen 12 unterhalb der nach innen gebogenen Stege 16 angeordnet sind. Die seitliche Führung erfolgt über die Laufrollen 12, während die Schrauben 13 bzw. 15 durch einen Schlitz 17 zwischen Stegen 16 durchgeführt sind.

An den Außenwänden 2 und 3 sowie den Wandabschnitten 5 sind an vertikalen Pfosten 26 seitlich hervorstehende Bolzen 18 mit einem verdickten Kopfabschnitt 19 vorgesehen. Die Bolzen an den Außenwänden 2 und 3 sind dabei bevorzugt als Gewindebolzen ausgebildet.

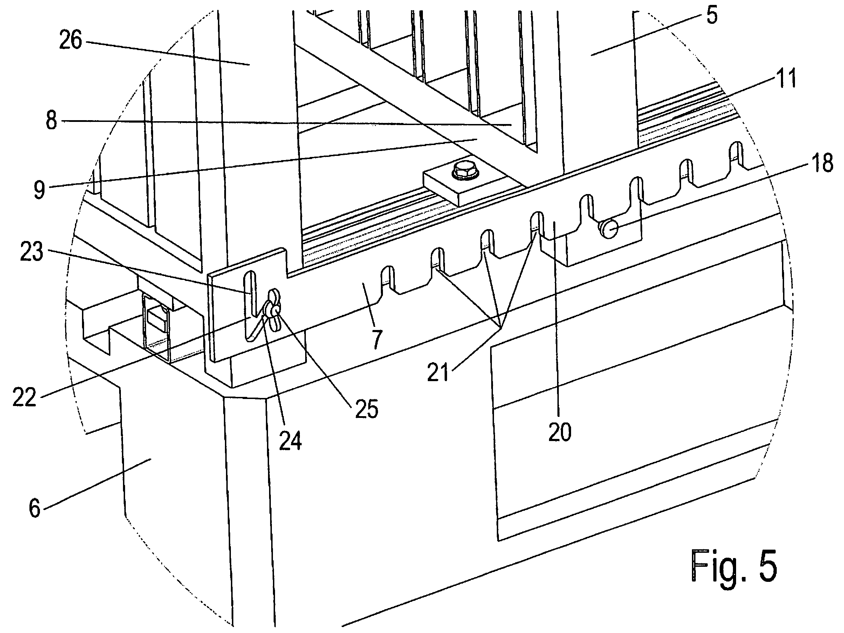

In Figur 5 ist die Vorrichtung 1 in einer Position gezeigt, in der die mittleren Wandabschnitte 5 entlang der Schienen 11 verschoben werden können. Hierfür sind die Halteelemente 7 in einer angehobenen Position fixiert. Die Halteelemente 7 sind als Zahnstangen ausgebildet und umfassen im mittleren Bereich eine Vielzahl von Zähnen 20, die durch nach unten offene Aussparungen 21 voneinander beabstandet sind. In jede Aussparung 21 kann ein Bolzen 18 eines Wandabschnittes 5 eingefügt werden.

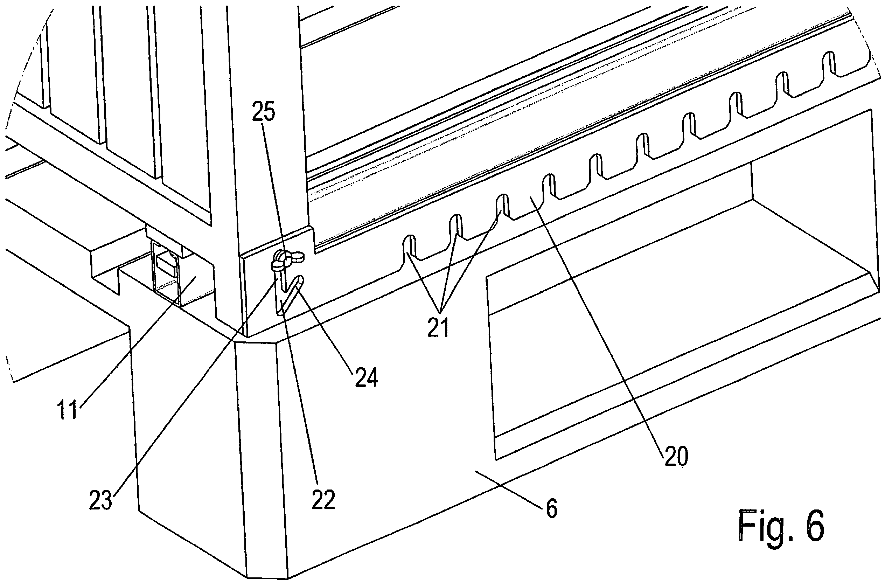

Im Bereich eines Pfostens 26 der Außenwände 2 und 3 ist an dem Haltelement 7 eine Kulissenführung 22 ausgebildet, die V-förmig angeordnet ist und einen senkrechten Schenkel 23 sowie einen verkürzten winkligen Schenkel 24 aufweist. Um das Halteelement 7 in einer angehobenen Position zu fixieren, wird eine Mutter 25 gelöst, und das Halteelement 7 entlang der Bolzen 18 nach oben angehoben, bis die Aussparungen 21 außer Eingriff mit einem Bolzen 18 an dem Wandabschnitt 5 gelangt sind. In dieser Position, wenn sämtliche drei Halteelemente 7 außer Eingriff mit den Bolzen 18 an den Wandabschnitten 5 angeordnet sind, können die Wandabschnitte 5 entlang der Schienen 11 verschoben werden, wobei die Laufrollen 12 an dem bodenseitig angeordneten Schlitten für eine exakte Führung sorgen. Nachdem der Wandabschnitt 5 in dem vorgegebenen Rastermaß verschoben wurde, kann nun eine Fixierung erfolgen. Hierfür werden die Halteelemente 7 jeweils entlang der Kulissenführung 22 schräg nach oben bewegt, um dann in den senkrechten Schenkel 23 der Kulissenführung 22 abgesenkt zu werden. Beim Absenken muss darauf geachtet werden, dass die Bolzen 18 in eine entsprechende Aussparung 21 zwischen zwei Zähnen 20 eingreifen. Nach dem Absenken der Halteelemente 7 ist die in Figur 6 gezeigte Position erreicht. Die Wandabschnitte 5 können nun nicht mehr entlang der Schiene 11 verschoben werden. Wenn Gegenstände in die Aufnahmeschächte 4 abgelegt werden, sorgt die Gewichtskraft der Gegenstände für eine Stabilisierung der Außenwände 2, 3 sowie der Wandabschnitte 5, indem die Querbalken 9 belastet werden und mit ihrer unteren Auflagefläche auf den ebenen Schienen 11 aufliegen. Dadurch werden Bewegungen der mittleren Wandabschnitte 5 vermieden, insbesondere wenn die Vorrichtung 1 vollständig mit Gegenständen befüllt ist.

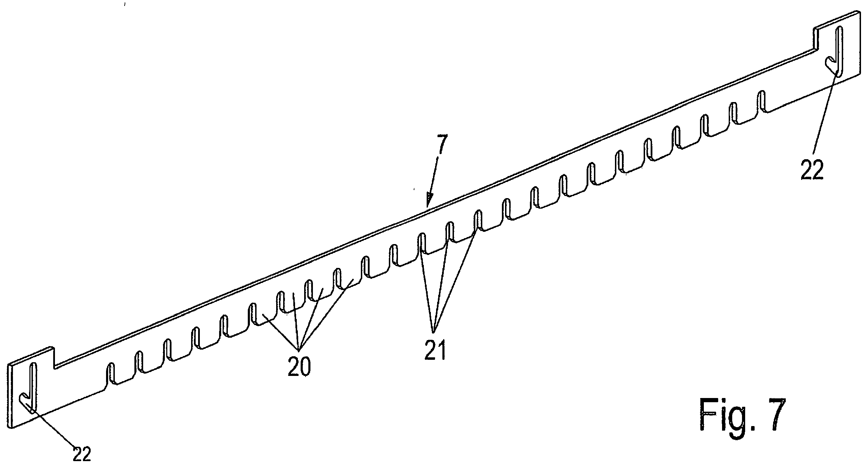

In Figur 7 ist ein Halteelement 7 im Detail dargestellt, das als Zahnstange ausgebildet ist und an gegenüberliegenden Endabschnitten jeweils eine Kulissenführung 22 aufweist. In einem mittleren Abschnitt sind eine Vielzahl von Zähnen 20 und Aussparungen 21 vorgesehen, die das Rastermaß vorgeben, in dem die Wandabschnitte 5 verschoben und fixiert werden können.

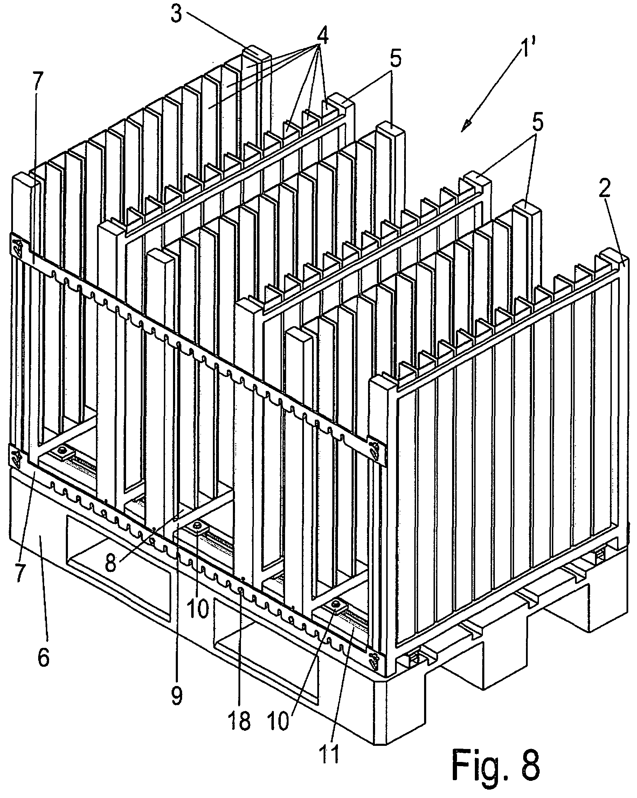

In Figur 8 ist eine modifizierte Ausführungsform 1' zum Lagern und zum Transport von Gegenständen gezeigt, bei der statt zwei mittlerer Wandabschnitte 5 vier mittlere Wandabschnitte 5 positioniert sind. Dadurch ist der Abstand zwischen zwei sich gegenüberliegenden Aufnahmeschächten 4 verkleinert worden, wogegen mehr Gegenstände aufgenommen werden können, da drei Reihen mit einer Vielzahl von Aufnahmeschächten 4 vorgesehen sind. Es ist möglich, sowohl den Abstand der Außenwände 2 bzw.3 von einem mittleren Wandabschnitt 5 einzustellen als auch den Abstand zwischen zwei mittleren Wandabschnitten 5 zu verändern. Ferner kann mit der erfindungsgemäßen Vorrichtung 1 bzw. 1' auch die Anzahl der Wandabschnitte 5 variiert werden, die zwischen den Außenwänden 2 und 3 angeordnet sind.

Die Außenwände 2 und 3 können über feste Verbindungsmittel an den Schienen 11 bzw. der Palette 6 fixiert sein. Es ist auch möglich, die Außenwände 2 und 3 ebenfalls als verschiebbare Wandabschnitte 5 auszubilden.

Die Außenwände 2 und 3 sowie die Wandabschnitte 5 bestehen vorzugsweise aus Metallblech, können aber auch aus Kunststoff oder anderen Materialien hergestellt sein. Statt der drei Halteelemente 7 können auch nur zwei Halteelemente 7 oder mehr als drei Halteelemente 7 vorgesehen sein.

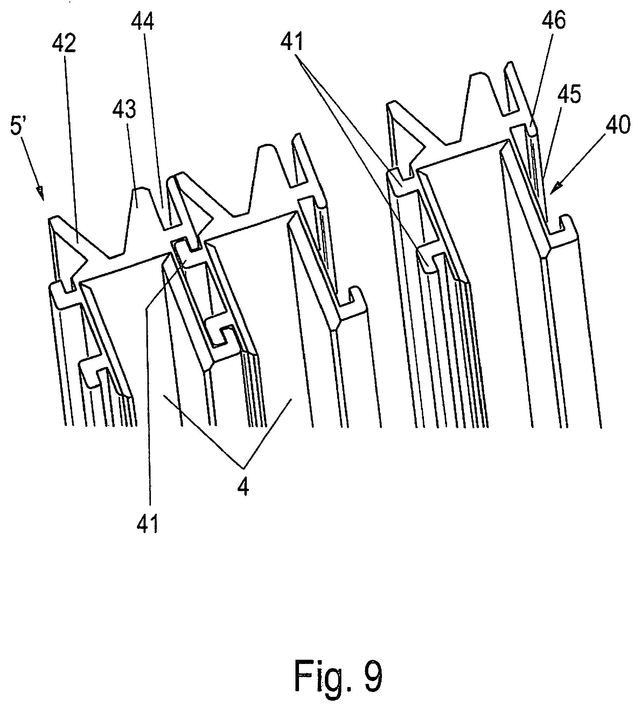

In Figur 9 ist eine modifizierte Ausführungsform eines Wandabschnittes 5' dargestellt, der aus einer Vielzahl von ineinander gesteckten Steckprofilen 40 gebildet ist. Jedes Steckprofil 40 umfasst einen Aufnahmeschacht 4 in den ein Endabschnitt eines länglichen Gegenstandes eingefügt werden kann. An den zu einem benachbarten Steckprofil gewandten Seite ist eine Nut 45 ausgebildet, die nach innen gerichtete Stege 46 aufweist. An der gegenüberliegenden Seite weist jedes Steckprofil 40 zwei hakenförmige Stege 41 auf, die in die Nut 45 eingeschoben werden können, um die benachbarten Steckprofile 40 miteinander zu verriegeln.

An einer Rückseite gegenüber den Aufnahmeschächten 4 sind zur Verstärkung zwei keilförmig angeordnete Leisten 42 und 43 sowie eine Schraubnut 44 ausgebildet. An der Schraubnut 44 können Quertraversen zur Abstützung der aus Steckprofilen 40 gebildeten Wandabschnittes 5' fixiert werden. Die Steckprofile 40 können dabei als extrudierte Aluminiumprofile ausgebildet sein, so dass eine Beschädigung härterer Gegenstände vermieden wird.

## Patentansprüche

1. Vorrichtung (1) zum Transport von Gegenständen, insbesondere Beschlagsteilen, mit einem Gestell, das an gegenüberliegenden Stirnseiten von einem Boden nach oben hervorstehende Außenwände (2, 3) aufweist, an denen eine Vielzahl von Aufnahmeschächten (4) für das Ablegen eines ersten Endabschnittes eines Gegenstandes vorgesehen ist, und mindestens einem von dem Boden hervorstehenden mittleren Wandabschnitt (5, 5'), an dem eine Vielzahl von Aufnahmeschächten (4) für das Ablegen eines zweiten zum ersten Endabschnitt gegenüberliegenden Endabschnittes des Gegenstandes vorgesehen sind, wobei die Aufnahmeschächte (4) durch U-förmige Profile gebildet sind, so dass die Endabschnitte des Gegenstandes geschützt angeordnet sind und der mindestens eine mittlere Wandabschnitt (5, 5') an einer bodenseitigen Führung verschiebbar gelagert ist und in unterschiedlichen Abständen von den Außenwänden (2, 3) fixierbar ist, **dadurch gekennzeichnet, dass** die Außenwände (2, 3) sowie der mindestens eine Wandabschnitt (5,5') bodenseitig jeweils einen Querbalken (9) umfassen, dessen Oberseite einen Boden (8) in den Aufnahmeschächten (4) ausbildet, wodurch die Last der in den Aufnahmeschächten (4) abgelegten Gegenstände über den Querbalken (9) verteilt wird,
der mindestens eine verschiebbare Wandabschnitt (5, 5') bodenseitig an mindestens einer im Querschnitt U-förmig ausgebildeten Schiene (11) geführt ist und mindestens eine mit dem Wandabschnitt (5, 5') verbundene Laufrolle (12) in der Schiene (11) geführt ist, und
zwischen den Außenwänden (2, 3) mindestens ein Halteelement (7) angeordnet ist, an dem der mindestens eine verschiebbare Wandabschnitt (5, 5') fixierbar ist, wobei das mindestens eine Halteelement (7) in einer ersten Position außer Eingriff mit dem mindestens einen verschiebbaren Wandabschnitt (5, 5') ist und in einer zweiten Position den mindestens einen Wandabschnitt (5, 5') fixiert, und das mindestens eine Halteelement (7) in der ersten und der zweiten Position über eine Kulissenführung (22) verrastbar ist.

2. Vorrichtung nach Anspruch 1, **dadurch gekennzeichnet, dass** zwischen den Außenwänden (2, 3) mehrere verschiebbar gelagerte Wandabschnitte (5, 5') vorgesehen sind.

3. Vorrichtung nach Anspruch 1 oder 2, **dadurch gekennzeichnet, dass** der mindestens eine Wandabschnitt (5, 5') bodenseitig einen Schlitten aufweist, an dem mindestens zwei voneinander in Längsrichtung der Schiene (11) beabstandete Laufrollen (12) an dem Schlitten gelagert sind.

4. Vorrichtung nach einem der Ansprüche 1 bis 3, **dadurch gekennzeichnet, dass** der mindestens eine verschiebbar gelagerte Wandabschnitt (5, 5') bodenseitig über mindestens zwei Schlitten an zwei parallel angeordneten Schienen (11) abgestützt ist.

5. Vorrichtung nach einem der Ansprüche 1 bis $, **dadurch gekennzeichnet, dass** das mindestens eine Halteelement (7) beabstandet vom Boden, vorzugsweise in der oberen Hälfte des mindestens einen Wandabschnitts (5, 5'), angeordnet ist.

6. Vorrichtung nach einem der Ansprüche 1 bis 5, **dadurch gekennzeichnet, dass** das mindestens eine Halteelement (7) als Zahnstange ausgebildet ist, an der der mindestens eine Wandabschnitt (5, 5') an vorbestimmten Positionen fixierbar ist.

7. Vorrichtung nach einem der Ansprüche 1 bis 6, **dadurch gekennzeichnet, dass** der mindestens eine mittlere Wandabschnitt (5') durch eine Vielzahl von Steckprofilen (40) gebildet ist.

8. Vorrichtung nach einem der Ansprüche 1 bis 7, **dadurch gekennzeichnet, dass** an der Unterseite des Gestells eine Palette (6) angeordnet ist.

## Claims

1. Device (1) for transporting objects, in particular fittings, having a frame comprising outer walls (2, 3) protruding upwards from a floor at opposite end faces, on which a plurality of receiving hoppers (4) are provided for placing a first end section of an object, and at least one middle wall section (5, 5') protruding from the floor, on which a plurality of receiving hoppers (4) are provided for placing a second end section of the object opposite the first end section, wherein the receiving hoppers (4) are formed by U-shaped profiles, so that the end sections of the object are arranged in a protected manner and the at least one middle wall section (5, 5') is displaceably mounted on a floor guide and can be fixed at different distances from the outer walls (2, 3), **characterized in that** the outer walls (2, 3) as well as the at least one wall section (5, 5') each comprise a cross-beam (9) on the floor side, the upper side of which forms a floor (8) in the receiving hoppers (4), resulting in the load of the objects placed in the receiving hoppers (4) being distributed over the cross-beam (9),
the at least one displaceable wall section (5, 5') is guided on the floor side on at least one rail (11) being configured to be U-shaped in cross-section and at least one roller (12) connected to the wall section (5, 5') is guided in the rail (11), and
between the outer walls (2, 3) at least one retaining element (7) is disposed, on which the at least one displaceable wall section (5, 5') can be fixed, wherein the at least one retaining element (7) in a first position is out of engagement with the at least one displaceable wall section (5, 5') and in a second position the at least one wall section (5, 5') is fixed and the at least one retaining element (7) in the first and the second position can be engaged by means of a sliding block guide (22).

2. The device according to claim 1, **characterized in that** a plurality of displaceably mounted wall sections (5, 5') are provided between the outer walls (2, 3).

3. The device according to claim 1 or 2, **characterized in that** the at least one wall section (5, 5') has a carriage on the floor side, on which at least two rollers (12) spaced apart from one another in the longitudinal direction of the rail (11) are mounted on the carriage.

4. The device according to one of the claims 1 to 3, **characterized in that** the at least one displaceably mounted wall section (5, 5') is supported on the floor side by means of at least two carriages on two parallel rails (11).

5. The device according to one of the claims 1 to 4, **characterized in that** the at least one retaining element (7) is disposed at a distance from the floor, preferably in the upper half of the at least one wall section (5, 5').

6. The device according to one of the claims 1 to 5, **characterized in that** the at least one retaining element (7) is configured as a toothed rack, on which the at least one wall section (5, 5') can be fixed at predetermined positions.

7. The device according to one of the claims 1 to 6, **characterized in that** the at least one middle wall section (5') is formed by a plurality of plug-in profiles (40).

8. The device according to one of the claims 1 to 7, **characterized in that** a pallet (6) is disposed on the underside of the frame.

## Revendications

1. Dispositif (1) de transport d'objets, en particulier de pièces de ferrures, comprenant un bâti qui comporte sur des faces frontales situées en regard des parois extérieures (2, 3) s'étendant vers le haut à partir d'un fond, sur lesquelles il est prévu un ensemble de logements de réception (4) pour permettre la mise en place d'un premier segment d'extrémité d'un objet, et au moins un segment de paroi médian (5, 5') faisant saillie à partir du fond sur lequel est prévu un ensemble de logements de réception (4) pour permettre la mise en place d'un second segment d'extrémité de l'objet situé à l'opposé du premier segment d'extrémité, les logements de réception (4) étant formés par des profilés en forme de U de sorte que les segments d'extrémité de l'objet puissent être protégés, et le segment de paroi médian (5, 5') étant monté mobile en translation sur un guidage situé côté fond et pouvant être fixé à différentes distances des parois externes (2, 3), **caractérisé en ce que** les parois externes (2, 3) ainsi que le segment de paroi (5, 5') comportent respectivement du côté du fond une poutre transversale (9) dont la face supérieure forme un fond (8) dans les logements de réception (4), de sorte que la charge des objets positionnés dans les logements de réception (4) soit répartie sur les poutres (9),
le segment de paroi coulissant (5, 5') est guidé côté fond sur au moins un rail (11) ayant une section en forme de U et au moins un galet de roulement (12) relié au segment de paroi (5, 5') est guidé dans le rail (11), et
entre les parois externes (2, 3) est monté au moins un élément de retenue (7) sur lequel peut être fixé le segment de paroi coulissant (5, 5'), cet élément de retenue (7) étant dans une première position hors de prise avec le segment de paroi coulissant (5, 5') et fixant dans une seconde position le segment de paroi (5, 5') et l'élément de retenue (7) pouvant être encliqueté dans la première et dans la seconde position sur un guidage à coulisse (22).

2. Dispositif conforme à la revendication 1,
**caractérisé en ce que**
entre les parois externes (2, 3) il est prévu plusieurs segments de paroi (5, 5') montés coulissants.

3. Dispositif conforme à la revendication 1 ou 2,
**caractérisé en ce que**
le segment de paroi (5, 5') comporte, côté fond, un chariot sur lequel sont montés au moins deux galets de roulement (12) situés à distance l'un de l'autre dans la direction longitudinale du rail (11).

4. Dispositif conforme à l'une des revendications 1 à 3,
**caractérisé en ce que**
le segment de paroi (5, 5') monté coulissant s'appuie, côté fond, par l'intermédiaire d'au moins deux chariots sur deux rails parallèles (11).

5. Dispositif conforme à l'une des revendications 1 à 4,
**caractérisé en ce que**
l'élément de retenue (7) est situé à distance du fond, de préférence dans la moitié supérieure du segment de paroi (5, 5').

6. Dispositif conforme à l'une des revendications 1 à 5,
**caractérisé en ce que**
l'élément de retenue (7) est réalisé sous la forme d'une crémaillère sur laquelle peut être fixé le segment de paroi (5, 5') dans des positions pré-définies.

7. Dispositif conforme à l'une des revendications 1 à 6,
**caractérisé en ce que**
le segment de paroi médian (5') est formé par une série de profilés d'enfichage (40).

8. Dispositif conforme à l'une des revendications 1 à 7,
**caractérisé en ce qu'**
une palette (6) est positionnée sur la face inférieure du bâti.
